(19) Europäisches Patentamt
European Patent Office
Office européen des brevets

(11) **EP 3 349 048 B1**

(12) **EUROPEAN PATENT SPECIFICATION**

(45) Date of publication and mention
of the grant of the patent:
**11.03.2020 Bulletin 2020/11**

(51) Int Cl.:
***G01V 5/00*** *(2006.01)*

(21) Application number: **18151062.9**

(22) Date of filing: **10.01.2018**

(54) **INSPECTION DEVICES AND METHODS FOR DETECTING A FIREARM IN A LUGGAGE**

INSPEKTIONSVORRICHTUNGEN UND -VERFAHREN ZUR DETEKTION EINER FEUERWAFFE IM GEPÄCK

DISPOSITIFS ET PROCÉDÉS D'INSPECTION PERMETTANT DE DÉTECTER UNE ARME À FEU DANS UN BAGAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2017 CN 201710021887**

(43) Date of publication of application:
**18.07.2018 Bulletin 2018/29**

(73) Proprietors:
• **Nuctech Company Limited**
**TongFang Building,**
**Shuangqinglu,**
**Haidian District**
**Beijing 100084 (CN)**
• **Tsinghua University**
**Beijing 100084 (CN)**

(72) Inventors:
• **WANG, Qili**
**Haidian District, Beijing 100084 (CN)**
• **DAI, Shiyu**
**Haidian District, Beijing 100084 (CN)**
• **GU, Jianping**
**Haidian District, Beijing 100084 (CN)**
• **LIU, Yaohong**
**Haidian District, Beijing 100084 (CN)**
• **ZHAO, Ziran**
**Haidian District, Beijing 100084 (CN)**

(74) Representative: **Yip, Matthew Wing Yu et al**
**Maucher Jenkins**
**26 Caxton Street**
**London SW1H 0RJ (GB)**

(56) References cited:
**WO-A1-2008/009134**

• **DOMINGO MERY ET AL: "Modern Computer Vision Techniques for X-Ray Testing in Baggage Inspection", IEEE TRANSACTIONS ON SYSTEMS, MAN, AND CYBERNETICS: SYSTEMS, vol. 47, no. 4, 6 December 2016 (2016-12-06), pages 682-692, XP55473372, Piscataway, NJ, USA ISSN: 2168-2216, DOI: 10.1109/TSMC.2016.2628381**
• **AKCAY SAMET ET AL: "Transfer learning using convolutional neural networks for object classification within X-ray baggage security imagery", 2016 IEEE INTERNATIONAL CONFERENCE ON IMAGE PROCESSING (ICIP), IEEE, 25 September 2016 (2016-09-25), pages 1057-1061, XP033016685, DOI: 10.1109/ICIP.2016.7532519 [retrieved on 2016-08-03]**
• **SHAOQING REN ET AL: "Faster R-CNN: Towards Real-Time Object Detection with Region Proposal Networks", IEEE TRANSACTIONS ON PATTERN ANALYSIS AND MACHINE INTELLIGENCE, vol. 39, no. 6, 13 September 2015 (2015-09-13), pages 1137-1149, XP55473561, USA ISSN: 0162-8828, DOI: 10.1109/TPAMI.2016.2577031**

Description

## TECHNICAL FIELD

The present disclosure relates to radiation inspection technologies, and more particularly, to an inspection device and a method for detecting a firearm in a luggage.

## BACKGROUND

Firearms are weapons having direct lethality and great destructive power, and if firearms are illegally carried, it may cause great potential dangers and social hidden dangers, and have a direct impact on social stability and people's lives and property. There is a large daily passenger flow in civil aviation, subway and rail transit systems, and the current manual detection is slow and relies heavily on the staff. Therefore, it is also the focus of attention today to improve a degree of automation and a detection speed of a system for detecting a firearm.

There is currently no effective means of detecting a firearm. According to the research, firearms are mainly transported through a luggage. Radiation imaging achieves the purpose of non-invasive inspection by imaging cargos and a luggage. This technology has been widely used in places such as airports, stations, express sites etc., and is the most important means in the field of security inspection for prohibited articles. In the process of inspecting using a small article machine, although an image of the interior of a luggage has been obtained, the effect of manual judgment is unsatisfied since there is a wide variety of articles, image judgers have various experience levels and it is a low probability that dangerous articles such as firearms exist.

WO 2008/009134 discloses a security screening system to determine if an item of luggage carries an object posing a security threat. The screening system may comprise an input for receiving image data derived from an apparatus that subjects the item of luggage to penetrating radiation, the image data conveying an image of the item of luggage. The security screening system may also comprises a processing module for processing the image data to identify in the image a plurality of regions of interest, the regions of interest manifesting a higher probability of depicting an object posing a security threat than portions of the image outside the regions of interest. The processing module may comprise: a first processing entity for processing a first one of the regions of interest to ascertain if the first region of interest depicts an object posing a security threat; and a second processing entity for processing a second one of the regions of interest to ascertain if the second region of interest depicts an object posing a security threat.

"Modern Computer Vision Techniques for X-Ray Testing in Baggage Inspection", Domingo Mery, et al; IEEE Transactions on System, Man, and Cybernetics: System vol. 47, 2016-12-06, attempts to make a contribution to the field of object recognition in X-ray testing by evaluating different computer vision strategies that have been proposed in the last years.

"Transfer learning using convolutional neural networks for object classification within x-ray baggage security imagery", Samet Akcay, 2016 IEEE international conference on image processing (ICIP), 2016-09-25, discusses the use of transfer learning, via the use of deep Convolutional Neural Networks (CNN) for the image classification problem posed within the context of X-ray baggage security screening and employing a transfer learning paradigm such that a pre-trained CNN, primarily trained for generalized image classification tasks where sufficient training data exists, can be specifically optimized as a later secondary process that targets specific this application domain.

"Faster R-CNN: Towards Real-Time Object Detection with Region Proposal Networks", Shaoqing Ren et al; IEEE Transactions on Pattern Analysis and Machine Intelligence, 2015-09-13, discusses Regional Proposal Networks that share full-image convolutional features with detection networks, enabling small marginal cost for computing proposals.

## SUMMARY

In view of one or more of the problems in the related art, an inspection device as recited by claim 1 and a method for detecting a firearm in a luggage as recited by claim 4 are provided in accordance with the present invention.

According to an aspect of the present disclosure, there is proposed a method for detecting a firearm in a luggage, according to claim 4.

According to an embodiment of the present disclosure, the method further comprises steps of: calculating a confidence level of including a firearm in each candidate region, and determining that there is a firearm included in a candidate region in a case that a confidence level for the candidate region is greater than a specific threshold.

According to an embodiment of the present disclosure, the method further comprises steps of: in a case that the same firearm is included in a plurality of candidate regions, marking and fusing images of the firearm in various candidate regions to obtain a position of the firearm.

According to an embodiment of the present disclosure, the step of training the initial detection network comprises:

adjusting the initial detection network using a plurality of sample candidate regions determined from the sample transmission images in a case of not sharing data of the convolutional layer between the RPN and the CNN; training the RPN in a case of sharing the data of the convolutional layer between the RPN and the CNN; and adjusting the initial detection network to converge in a case of keeping sharing the data of the convolutional layer between the RPN and the CNN unchanged to obtain the firearm detection neural network.

According to an embodiment of the present disclosure, the step of training the initial detection network further comprises: deleting a sample candidate region in the plurality of sample candidate regions which has an overlapped area less than a threshold with a rectangular block which is manually marked for a firearm.

According to another aspect of the present disclosure, there is proposed an inspection device, according to claim 1.

According to an embodiment of the present disclosure, the processor is configured to calculate a confidence level of including a firearm in each candidate region, and determine that there is a firearm included in a candidate region in a case that a confidence level for the candidate region is greater than a specific threshold.

According to an embodiment of the present disclosure, the processor is configured to mark and fuse images of the firearm in various candidate regions to obtain a position of the firearm in a case that the same firearm is included in a plurality of candidate regions.

With the above solutions, it is possible to determine more accurately whether there is a firearm included in a luggage. In other examples, after a firearm is detected using the above method, a label is marked in the image to prompt an image judger, thereby reducing the workload of manual image judgment.

## BRIEF DESCRIPTION OF THE DRAWINGS

For a better understanding of the present disclosure, the present disclosure will be described in detail according to the following accompanying drawings:

Fig. 1 is a structural diagram of an inspection device according to an embodiment of the present disclosure;

Fig. 2 is a diagram illustrating a structure of a computing device included in the inspection device illustrated in Fig. 1;

Fig. 3 is a diagram illustrating a process of creating a database for training according to an embodiment of the present disclosure;

Fig. 4 is a diagram illustrating a process of creating a firearm detection network model;

Fig. 5 is a schematic flowchart specifically illustrating creating a firearm detection network model according to an embodiment of the present disclosure;

Fig. 6 illustrates a schematic flowchart of a process of detecting firearms according to an embodiment of the present disclosure; and

Fig. 7 illustrates a diagram of detecting a firearm in a luggage according to an embodiment of the present disclosure.

## DETAILED DESCRIPTION

The specific embodiments of the present disclosure will be described in detail below. It should be noted that the embodiments herein are used for illustration only, without limiting the present disclosure. In the description below, a number of specific details are explained to provide better understanding of the present disclosure. However, it is apparent to those skilled in the art that the present disclosure can be implemented without these specific details. In other instances, well known structures, materials or methods are not described specifically so as not to obscure the present disclosure.

Throughout the specification, the reference to "one embodiment," "an embodiment," "one example" or "an example" means that the specific features, structures or properties described in conjunction with the embodiment or example are included in at least one embodiment of the present disclosure. Therefore, the phrases "in one embodiment," "in an embodiment," "in one example" or "in an example" occurred in various positions throughout the specification may not necessarily refer to the same embodiment or example. Furthermore, specific features, structures or properties may be combined into one or more embodiments or examples in any appropriate combination and/or sub-combination. Moreover, it should be understood by those skilled in the art that the term "and/or" used herein means any and all combinations of one or more listed items.

In view of the problems in the related art, the embodiments of the present disclosure propose a method for detecting a firearm in a luggage. A plurality of candidate regions in a transmission image are determined using a trained firearm detection neural network, and then the plurality of candidate regions are classified using the firearm detection neural network to determine whether there is a firearm included in the transmission image. In this way, it is more accurately detected whether there is a firearm included in a luggage.

The automatic firearm detection technology according to the embodiments of the present disclosure includes three steps of 1) creating a firearm detection database, 2) automatically creating an detection model, and 3) automatically detecting a firearm. Specifically, creating a firearm detection database comprises three steps of image acquisition, image preprocessing and region of interest extraction. Automatically detecting a firearm primarily comprises three steps of image preprocessing, judgment and marking a suspicious region.

Before a firearm detection model is created, a firearms detection database is created, which includes three steps of image acquisition, image preprocessing and region of interest extraction. Image acquisition includes, for example, collecting a considerable number of images of firearms from a small article machine, so that an image database includes images of different numbers of firearms which are placed in various forms. The image preprocessing specifically involves, for example, a normalization process. Different scanning devices may obtain different images due to different energy/doses of ray sources and different sizes of detectors. In order to reduce this difference, the image may be normalized. In addition, the region of interest extraction involves manually marking positions of firearms in units of firearms in the scanned grayscale image and giving coordinates $(x,y,w,h)$ of the firearms, where $x$ and $y$ represent coordinates of a lower left apex of a circumscribed rectangle of a firearm, $w$ represents a width of the circumscribed rectangle, and $h$ represents a height of the circumscribed rectangle.

A detection model is automatically created using the deep learning theory. For example, in the present application, a firearm is primarily detected using the deep learning theory. There are many types of neural networks in the field of computer vision, but the Convolutional Neural Network (CNN) is a deep learning model which is most widely used. Candidate region extraction and CNN classification are performed using a CNN as an example in the embodiments of the present disclosure. The candidate region extraction uses a Region Proposal Network (RPN) to realize an end-to-end network for detecting a firearm.

A firearm detection process involves directly generating candidate regions using a trained CNN and classifying the candidate regions to determine whether there is a firearm in the candidate regions. In addition, a specific position of the firearm in the candidate regions is regressed to determine coordinates of the firearm, and a detection result marked in a rectangular block may be given.

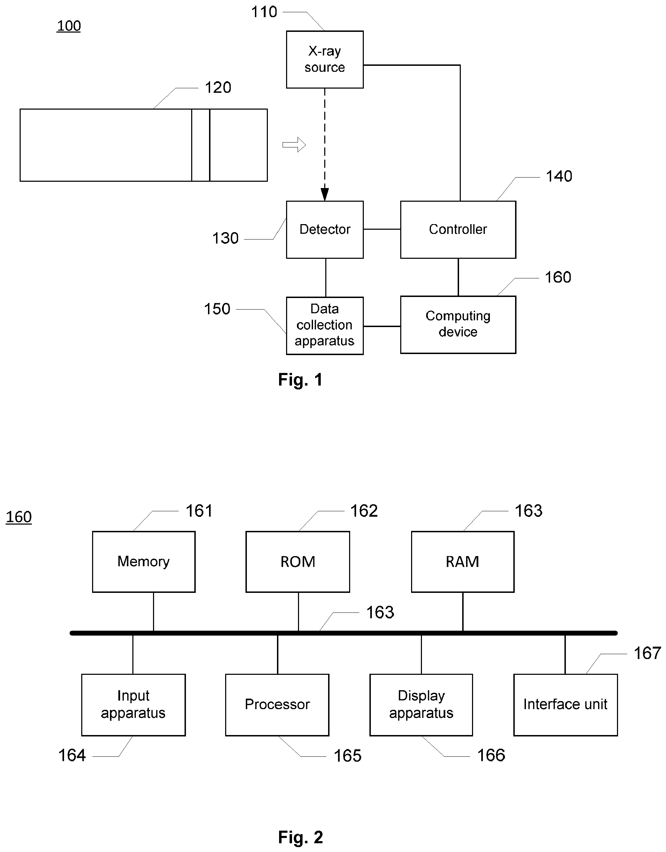

Fig. 1 illustrates a structural diagram of an inspection device according to an embodiment of the present disclosure. As shown in Fig. 1, an inspection device 100 according to an embodiment of the present disclosure comprises an X-ray source 110, a detector 130, a data collection apparatus 150, a controller 140, and a computing device 160, and performs security inspection on an inspected object 120 such as a container truck etc., for example, judges whether there is a firearm included therein. Although the detector 130 and the data collection apparatus 150 are separately described in this embodiment, it should be understood by those skilled in the art that they may also be integrated together as an X-ray detection and data collection device.

According to some embodiments, the X-ray source 110 may be an isotope, or may also be an X-ray machine, an accelerator, etc. The X-ray source 110 may be a single-energy ray source or a dual-energy ray source. In this way, transmission scanning is performed on the inspected object 120 through the X-ray source 110, the detector 150, the controller 140, and the computing device 160 to obtain detection data. For example, in a process that the inspected object 120 moves, an operator controls the controller 140 to transmit an instruction through a man-machine interface of the computing device 160 to instruct the X-ray source 110 to emit rays, which are transmitted through the inspected object 120 and are then received by the detector 130 and the data collection device 150. Further, data is processed by the computing device 160 to obtain a transmission image and store the transmission image in a memory, then a plurality of candidate regions in the transmission image are determined using a trained firearm detection neural network, and the plurality of candidate regions are classified using the firearm detection neural network to determine whether there is a firearm included in the transmission image.

Fig. 2 illustrates a structural diagram of the computing device illustrated in Fig. 1. As shown in Fig. 2, a signal detected by the detector 130 is collected by a data collector, and data is stored in a memory 161 through an interface unit 167 and a bus 163. A Read Only Memory (ROM) 162 stores configuration information and programs of a computer data processor. A Random Access Memory (RAM) 163 is configured to temporarily store various data when a processor 165 is in operation. In addition, computer programs for performing data processing, such as an image processing program, a firearm recognition convolutional network program etc., are also stored in the memory 161. The internal bus 163 connects the memory 161, the ROM 162, the RAM 163, an input apparatus 164, the processor 165, a display apparatus 166, and the interface unit 167 described above.

After a user inputs an operation command through the input apparatus 164 such as a keyboard and a mouse etc., instruction codes of a computer program instruct the processor 165 to perform a predetermined data processing algorithm. After a result of the data processing is acquired, the result is displayed on the display apparatus 166 such as a Liquid Crystal Display (LCD) display etc. or is directly output in a form of hard copy such as printing etc. In addition, the processor 165 in the computer may be configured to execute a software program to calculate a confidence level of including a firearm in each candidate region, and determine that there is a firearm included in the candidate region if the confidence level is greater than a specific threshold. In addition, the processor 165 may be configured to execute a software program to mark an image of a firearm in each candidate region in a case that the same firearm is included in a plurality of candidate regions, and fuse images of the firearm in various candidate regions, to obtain a position of the firearm.

According to an embodiment of the present disclosure, a method for automatically detecting a firearm according to the present disclosure is mainly based on the deep learning theory, and performs training using a CNN network to obtain a detection model. For example, a convolutional neural network is used to automatically detect a firearm region in a radiation image. Before the convolutional network is trained, a firearm detection database needs to be created to train the convolutional network.

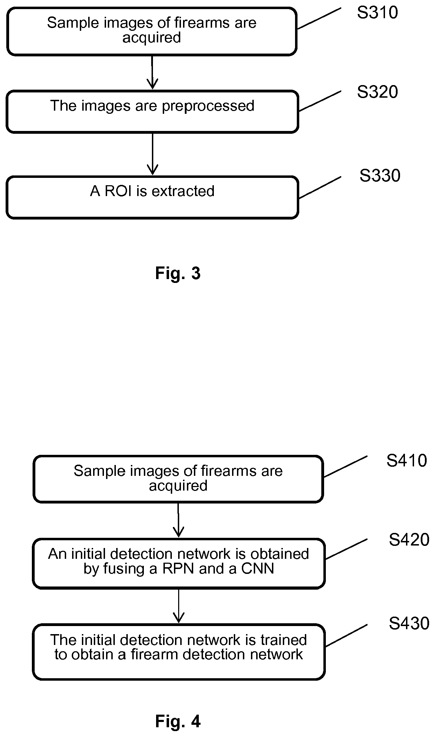

Fig. 3 is a diagram illustrating a process of creating a database for training according to an embodiment of the present disclosure. As shown in Fig. 3, a firearm detection database is primarily created through three steps which are image collection, image pre-processing, and Region Of Interest (ROI) extraction.

In step S310, sample images are acquired. For example, a considerable number of images of firearms from a small article machine are collected, so that an image database includes images of different numbers of firearms which are placed in various forms to obtain a firearm image library { }. The diversity of the samples is enriched, so that a firearm detection algorithm according to the present disclosure has a generalization capability.

In step S320, the images are preprocessed. For example, in order to be applicable to scanning devices of various small article machines, the images may be normalized while acquiring the images. Specifically, assuming that an original two-dimensional image signal is $X$, a normalized image $\overline{X}$ may be obtained by scaling a resolution of $X$ to 5 mm/pixel according to physical parameters of a scanning device and performing grayscale stretching on $X$.

In step S330, a ROI is extracted. For example, an air part in $\overline{X}$ is detected and is excluded from a detection process, which on the one hand speeds up the operation, and on the other hand avoids a false positive in the air. For example, statistics is performed on a histogram of $\overline{X}$, a brightest peak $a$ is calculated in the histogram, a normalized air distribution $(a, \sigma_a)$ with the brightest peak $a$ as a center is fitted, and then a threshold is set as $t_a = a - 3 * \sigma_a$. Pixels in $\overline{X}$ which are greater than $t_a$ are considered to be air, and are not subjected to detection and calculation. In this way, in the scanned grayscale image, positions of firearms are manually marked in units of firearms and coordinates $(x, y, w, h)$ of the firearms are given, where $x$ and $y$ represent coordinates of a lower left apex of a circumscribed rectangle of a firearm, $w$ represents a width of the circumscribed rectangle, and $h$ represents a height of the circumscribed rectangle.

Fig. 4 is a diagram illustrating a process of creating a firearm detection network model according to an embodiment of the present disclosure. As shown in Fig. 4, in the embodiment of the present disclosure, a region proposal method is adopted, and candidate region extraction is combined with CNN classification by using a RPN network to create an end-to-end firearm detection network. In step S410, sample transmission images of firearms are acquired. For example, the sample transmission images are obtained from the firearm sample image database created above. In step S420, an initial detection network is obtained by fusing the RPN and a convolutional layer of a CNN, and then in step S430, the initial detection network is trained by using the sample transmission images to obtain a firearm detection neural network.

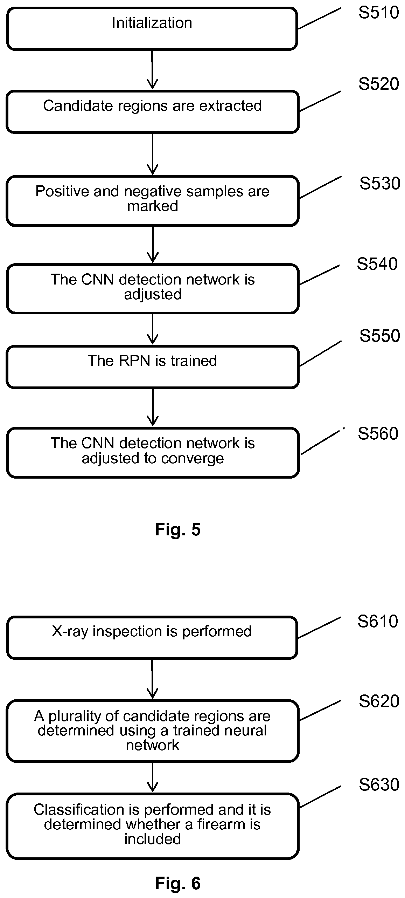

According to the present invention a RPN module and a CNN detection module are used in the present algorithm. There are two training methods, one of which is an alternative training method, and the other of which is a fusion training method. The fusion training method is different from the alternative training method in that in the process of reverse regression, a layer shared by the two networks combines a loss of the RPN network with a loss of the CNN detection network together. Fig. 5 illustrates an example of the alternate training method. A specific training process of the alternate training method is as follows.

In step S510, initialization is performed. Firstly, an input image is scaled to a size of less than 600 pixels in the short side, and weights in the RPN network and the CNN detection network are initialized by a pre-trained model, wherein initial biases of a visible layer and a hidden layer are $a$ and $b$, an initial weight matrix is $W$, and increments of the biases and the weight matrix are $\Delta a$, $\Delta b$ and $\Delta W$. The advantage of using the pre-trained model to initialize the network is that the model is nearly optimal to some extent, and saves time and resources over random initialization.

In step S520, candidate regions are extracted. On a feature map extracted on a last layer of the CNN network, $n*n$ sliding windows are used to generate full connection features with a length in m dimensions, which are combined with a region of interest in each sliding window, to generate candidate regions $X = \{\vec{x_1}, \vec{x_2}, \vec{x_3}, ..., \vec{x_k}\}$ using different scales and image aspect ratios, where $k$ is a number of the extracted candidate regions. At the same time, two branches of full connection layers are generated on this layer of features, which are a rectangular block classification layer and a rectangular block regression layer, and there are $2*k$ candidate regions and $4*k$ candidate regions on these two different layers respectively.

In step S530, positive and negative samples are marked. After the candidate regions are extracted, positive and negative samples are marked for the candidate regions using a marking rule as follows. When a portion of a rectangular block of a candidate region which is overlapped with a real value is greater than 0.7, the candidate region is marked as a positive sample, and when a portion of a rectangular block of a candidate region which is overlapped with the real value is less than 0.3, the candidate region is marked as a negative sample. Remaining candidate regions are discarded, and are not used for training.

In step S540, the obtained candidate regions are combined with the obtained CNN detection network to fine-tune the detection network. In this step, both networks do not share data of the convolutional layer.

In step 550, a trained network is used to initialize the RPN and train the RPN network. In this step, the data of the convolutional layer is fixed, and only a part of the network layer which belongs to the RPN is fine-tuned. In this step, both networks share the convolutional layer.

In step S560, sharing of the convolutional layer is kept unchanged, and the CNN detection network continues to be fine-tuned to update the biases and the weight matrix:

$$W = W + \eta(\frac{1}{n_s}\Delta W), a = a + \eta(\frac{1}{n_s}\Delta a), b = b + \eta(\frac{1}{n_s}\Delta b)$$

until they converge, and a final firearm detection network model is created, where $n_s$ is a number of training samples, $a$ and $b$ are initial biases of the visible layer and the hidden layer, $W$ is an initial weight matrix, $\Delta a$, $\Delta b$ and $\Delta W$ are increments of the biases and the weight matrix, and $\eta$ is a learning rate for updating the network biases and the weights, which has a value in a range between $(0,1)$.

Fig. 6 illustrates a schematic flowchart of a process of detecting a firearm according to an embodiment of the present disclosure. As shown in Fig. 6, the firearm detection process is divided into two steps of image preprocessing and firearm detection. In step S610, X-ray inspection is performed on a luggage using the inspection system illustrated in Fig. 1 to obtain a transmission image. For example, the image may also be pre-processed in this step. The collected firearm image information is pre-processed using the above-mentioned image preprocessing method. For example, in order to be applicable to scanning devices of various small article machines, the images may be normalized while acquiring the images. Specifically, assuming that an original two-dimensional image signal is $X$, a normalized image $\overline{X}$ may be obtained by scaling a resolution of $X$ to 5 mm/pixel according to physical parameters of a scanning device and performing grayscale stretching on $X$.

Then, in step S620, a plurality of candidate regions in the transmission image are determined using the trained firearm detection neural network. For example, the resulting pre-processed firearm image is input into the detection network, which is a subset of networks created using a model, and a plurality of candidate regions are generated in the input image. In general, the obtained plurality of candidate regions which include the same firearm are detected, and have different sizes. In addition, if there are multiple firearms included in the luggage, a plurality of candidate regions may be generated for each of the firearms.

In step S630, the plurality of candidate regions are classified using the firearm detection neural network to determine whether there is a firearm included in the transmission image. For example, firearm classification is performed in the candidate regions using the firearm detection neural network, and if a confidence level for a firearm in a region is greater than a specified threshold, for example, 0.9, it is considered that there is a firearm in this region.

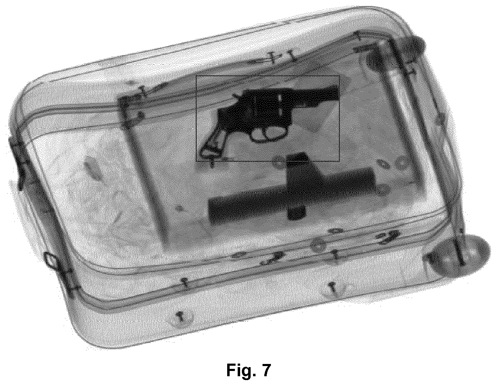

Fig. 7 illustrates a diagram of detecting a firearm in a luggage according to an embodiment of the present disclosure. As shown in Fig. 7, a rectangular block may be marked, and all candidate regions in which there is a firearm may finally be fused to obtain a final position of the firearm.

The automatic firearm detection technology according to the above embodiments can detect a firearm from a scanned image of a small article machine, which can avoid the problems of detection vulnerability and inefficiency of manual image judgment using the traditional methods and is of great significance for cracking down on illegal carrying of firearms.

The foregoing detailed description has set forth various embodiments of the inspection device and the method for detecting a firearm in a luggage via the use of diagrams, flowcharts, and/or examples. In a case that such diagrams, flowcharts, and/or examples contain one or more functions and/or operations, it will be understood by those skilled in the art that each function and/or operation within such diagrams, flowcharts or examples may be implemented, individually and/or collectively, by a wide range of structures, hardware, software, firmware, or virtually any combination thereof. In one example not forming part of the claimed invention, several portions of the subject matter described in the embodiments of the present disclosure may be implemented via Application Specific Integrated Circuits (ASICs), Field Programmable Gate Arrays (FPGAs), Digital Signal Processors (DSPs), or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of those skilled in the art in ray of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Versatile Disk (DVD), a digital tape, a computer memory, etc.; and a transmission type medium such as a digital and/or an analog communication medium (e.g., a fiber optic cable, a waveguide, a wired communications link, a wireless communication link, etc.).

While the present disclosure has been described with reference to several typical embodiments, it is apparent to those skilled in the art that the terms are used for illustration and explanation purpose and not for limitation. The present disclosure may be practiced in various forms without departing from the present disclosure, which is solely defined by the appended claims.

**Claims**

1. An inspection device, comprising:

an X-ray inspection system (100) configured to perform X-ray inspection on an item of luggage to obtain a transmission image of said luggage;
a memory (160, 161, 162, 163) configured to store the transmission image and having sample transmission images of firearms stored thereon; and
a processor (160, 165) configured to:

determine a plurality of candidate regions in the transmission image using a trained firearm detection neural network; and
classify the plurality of candidate regions using the firearm detection neural network to determine whether there is a firearm included in the transmission image, **characterized in that**:

the processor is further configured to fuse a Region Proposal Network, RPN, and a convolutional layer of a Convolutional Neural Network, CNN, to obtain an initial detection network, and train the initial detection network using the sample transmission images to obtain the trained firearm detection neural network.

2. The inspection device according to claim 1, wherein the processor is configured to calculate a confidence level of including a firearm in each candidate region, and determine that there is a firearm included in a candidate region in a case that a confidence level for the candidate region is greater than a specific threshold.

3. The inspection device according to any of claims 1 to 2, wherein the processor is configured to mark and fuse images of the firearm in various candidate regions to obtain a position of the firearm in a case that the same firearm is included in a plurality of candidate regions.

4. A method for detecting a firearm in luggage, comprising steps of:

performing (S610) X-ray inspection on the luggage to obtain a transmission image of said luggage;
determining (S620) a plurality of candidate regions in the transmission image using a trained firearm detection neural network; and
classifying (S630) the plurality of candidate regions using the firearm detection neural network to determine whether there is a firearm included in the transmission image, **characterized in** further comprising steps of:

creating (S410) sample transmission images of firearms;
fusing (S420) a Region Proposal Network, RPN, and a convolutional layer of a Convolutional Neural Network, CNN, to obtain an initial detection network; and
training (S430) the initial detection network using the sample transmission images to obtain the trained firearm detection neural network.

**5.** The method according to claim 4, further comprising steps of:
calculating a confidence level of including a firearm in each candidate region, and determining that there is a firearm included in a candidate region in a case that a confidence level for the candidate region is greater than a specific threshold.

**6.** The method according to any of claims 4 to 5, further comprising steps of:
in a case that the same firearm is included in a plurality of candidate regions, marking and fusing images of the firearm in various candidate regions to obtain a position of the firearm.

**7.** The method according to claim 4, wherein the step of training the initial detection network comprises:

adjusting (S540) the initial detection network using a plurality of sample candidate regions determined from the sample transmission images in a case of not sharing data of the convolutional layer between the RPN and the CNN;

training (S550) the RPN in a case of sharing the data of the convolutional layer between the RPN and the CNN; and

adjusting (S560) the initial detection network to converge in a case of keeping sharing the data of the convolutional layer between the RPN and the CNN unchanged to obtain the firearm detection neural network.

**8.** The method according to claim 7, wherein the step of training the initial detection network further comprises:
deleting a sample candidate region in the plurality of sample candidate regions which has an overlapped area less than a threshold with a rectangular block which is manually marked for a firearm.

**Patentansprüche**

**1.** Prüfvorrichtung, die Folgendes umfasst:

ein Röntgenprüfsystem (100), konfiguriert zum Durchführen von Röntgenprüfung an einem Gepäckstück, um ein Übertragungsbild des genannten Gepäckstücks zu erhalten;
einen Speicher (160, 161, 162, 163), der zum Speichern des Übertragungsbildes konfiguriert ist und auf dem Beispielübertragungsbilder von Schusswaffen gespeichert sind; und
einen Prozessor (160, 165), konfiguriert zum:

Bestimmen einer Mehrzahl von Kandidatenregionen in dem Übertragungsbild anhand eines trainierten neuronalen Netzwerks zur Schusswaffenerkennung; und
Klassifizieren der Mehrzahl von Kandidatenregionen mit dem neuronalen Netzwerk zur Schusswaffenerkennung, um festzustellen, ob sich in dem Übertragungsbild eine Schusswaffe befindet, **dadurch gekennzeichnet, dass**:

der Prozessor ferner konfiguriert ist zum Verbinden eines RPN (Region Proposal Network) und einer Faltungsschicht eines CNN (Convolutional Neural Network), um ein anfängliches Erkennungsnetzwerk zu erhalten, und zum Trainieren des anfänglichen Erkennungsnetzwerks anhand der Beispielübertragungsbilder, um das trainierte neuronale Netzwerk zur Schusswaffenerkennung zu erhalten.

**2.** Prüfvorrichtung nach Anspruch 1, wobei der Prozessor zum Berechnen eines Konfidenzniveaus für das Vorhandensein einer Schusswaffe in jeder Kandidatenregion und zum Feststellen konfiguriert ist, dass in einer Kandidatenregion eine Schusswaffe enthalten ist, falls ein Konfidenzniveau für die Kandidatenregion größer ist als eine spezifische Schwelle.

**3.** Prüfvorrichtung nach einem der Ansprüche 1 bis 2, wobei der Prozessor zum Markieren und Verbinden von Bildern der Schusswaffe in verschiedenen Kandidatenregionen konfiguriert ist, um eine Position der Schusswaffe zu erhalten, falls dieselbe Schusswaffe in einer Mehrzahl von Kandidatenregionen enthalten ist.

**4.** Verfahren zum Erkennen einer Schusswaffe in Gepäck, das die folgenden Schritte beinhaltet:

Durchführen (S610) einer Röntgenprüfung an dem Gepäckstück, um ein Übertragungsbild des genannten Gepäckstücks zu erhalten;

Bestimmen (S620) einer Mehrzahl von Kandidatenregionen in dem Übertragungsbild anhand eines trainierten neuronalen Netzwerks zur Schusswaffenerkennung; und

Klassifizieren (S630) der Mehrzahl von Kandidatenregionen anhand des neuronalen Netzwerks zur Schusswaffenerkennung, um festzustellen, ob in dem Übertragungsbild eine Schusswaffe enthalten ist, **dadurch gekennzeichnet, dass** es ferner die folgenden Schritte beinhaltet:

Erzeugen (S410) von Beispielübertragungsbildern von Schusswaffen;
Verbinden (S420) eines RPN (Region Proposal Network) und einer Faltungsschicht eines CNN (Convolutional Neural Network), um ein anfängliches Erkennungsnetzwerk zu erhalten; und
Trainieren (S430) des anfänglichen Erkennungsnetzwerks anhand der Beispielübertragungsbilder, um das trainierte neuronale Netzwerk zur Schusswaffenerkennung zu erhalten.

5. Verfahren nach Anspruch 4, das ferner die folgenden Schritte beinhaltet:
Berechnen eines Konfidenzniveaus für das Vorhandensein einer Schusswaffe in jeder Kandidatenregion und Feststellen, dass in einer Kandidatenregion eine Schusswaffe enthalten ist, falls ein Konfidenzniveau für die Kandidatenregion größer ist als eine spezifische Schwelle.

6. Verfahren nach einem der Ansprüche 4 bis 5, das ferner die folgenden Schritte beinhaltet:
Markieren und Verbinden von Bildern der Schusswaffe in verschiedenen Kandidatenregionen zum Erhalten einer Position der Schusswaffe, falls dieselbe Schusswaffe in mehreren Kandidatenregionen enthalten ist.

7. Verfahren nach Anspruch 4, wobei der Schritt des Trainierens des anfänglichen Erkennungsnetzwerks Folgendes beinhaltet:

Justieren (S540) des anfänglichen Erkennungsnetzwerks mit einer Mehrzahl von Beispielkandidatenregionen, die von den Beispielübertragungsbildern bestimmt wurden, falls keine Daten der Faltungsschicht zwischen dem RPN und dem CNN gemeinsam genutzt werden;
Trainieren (S550) des RPN im Falle des gemeinsamen Nutzens der Daten der Faltungsschicht zwischen dem RPN und dem CNN; und
Justieren (S560) des anfänglichen Erkennungsnetzwerks zum Konvergieren, falls die Daten der Faltungsschicht zwischen dem RPN und dem CNN unverändert weiter gemeinsam genutzt werden, um das neuronale Netzwerk zur Schusswaffenerkennung zu erhalten.

8. Verfahren nach Anspruch 7, wobei der Schritt des Trainierens des anfänglichen Erkennungsnetzwerks ferner Folgendes beinhaltet:
Löschen einer Beispielkandidatenregion in der Mehrzahl von Beispielkandidatenregion, die einen überlappten Bereich hat, der kleiner ist als eine Schwelle mit einem rechteckigen Block, der manuell für eine Schusswaffe markiert ist.

**Revendications**

1. Dispositif d'inspection, comprenant :

un système d'inspection par rayons X (100) configuré pour réaliser une inspection par rayons X sur un article de bagage pour obtenir une image de transmission dudit bagage ;
une mémoire (160, 161, 162, 163) configurée pour stocker l'image de transmission et présentant des images de transmission d'échantillon d'armes à feu stockées dessus ; et
un processeur (160, 165) configuré pour :

déterminer une pluralité de régions candidates dans l'image de transmission en utilisant un réseau neuronal de détection d'armes à feu entraîné ; et
classifier la pluralité de régions candidates en utilisant le réseau neuronal de détection d'armes à feu pour déterminer si une arme à feu est incluse dans l'image de transmission, **caractérisé en ce que** :
le processeur est en outre configuré pour fusionner un réseau de proposition de région, RPN, et une couche à convolution d'un réseau neuronal convolutif, CNN, pour obtenir un réseau de détection initial, et entraîner le réseau de détection initial en utilisant les images de transmission d'échantillon pour obtenir le réseau neuronal de détection d'armes à feu entraîné.

**2.** Dispositif d'inspection selon la revendication 1, dans lequel le processeur est configuré pour calculer un niveau de confiance d'une inclusion d'une arme à feu dans chaque région candidate, et déterminer le fait qu'une arme à feu est incluse dans une région candidate dans le cas où un niveau de confiance pour la région candidate est supérieur à un seuil spécifique.

**3.** Dispositif d'inspection selon l'une quelconque des revendications 1 à 2, dans lequel le processeur est configuré pour marquer et fusionner des images de l'arme à feu dans diverses régions candidates pour obtenir une position de l'arme à feu dans le cas où la même arme à feu est incluse dans une pluralité de régions candidates.

**4.** Procédé de détection d'une arme à feu dans un bagage, comprenant des étapes :

de réalisation (S610) d'une inspection par rayons X sur le bagage pour obtenir une image de transmission dudit bagage ;
de détermination (S620) d'une pluralité de régions candidates dans l'image de transmission en utilisant un réseau neuronal de détection d'armes à feu entraîné ; et
de classification (S630) de la pluralité de régions candidates en utilisant le réseau neuronal de détection d'armes à feu pour déterminer si une arme à feu est incluse dans l'image de transmission, **caractérisé en ce qu'**il comprend en outre des étapes :

de création (S410) d'images de transmission d'échantillon d'armes à feu ;
de fusion (S420) d'un réseau de proposition de région, RPN, et une couche à convolution d'un réseau neuronal convolutif, CNN, pour obtenir un réseau de détection initial ; et
d'entraînement (S430) du réseau de détection initial en utilisant les images de transmission d'échantillon pour obtenir le réseau neuronal de détection d'armes à feu entraîné.

**5.** Procédé selon la revendication 4, comprenant en outre des étapes :
de calcul d'un niveau de confiance d'une inclusion d'une arme à feu dans chaque région candidate, et de détermination du fait qu'une arme à feu est incluse dans une région candidate dans le cas où un niveau de confiance pour la région candidate est supérieur à un seuil spécifique.

**6.** Procédé selon l'une quelconque des revendications 4 à 5, comprenant en outre des étapes :
dans le cas où la même arme à feu est incluse dans une pluralité de régions candidates, de marquage et de fusion d'images de l'arme à feu dans diverses régions candidates pour obtenir une position de l'arme à feu.

**7.** Procédé selon la revendication 4, dans lequel l'étape d'entraînement du réseau de détection initial comprend :

un ajustement (S540) du réseau de détection initial en utilisant une pluralité de régions candidates d'échantillon déterminée à partir des images de transmission d'échantillon dans le cas d'un non-partage de données de la couche à convolution entre le RPN et le CNN;
un entraînement (S550) du RPN dans le cas d'un partage des données de la couche à convolution entre le RPN et le CNN ; et
un ajustement (S560) du réseau de détection initial pour converger dans le cas d'un maintien d'un partage des données de la couche à convolution entre le RPN et le CNN inchangé pour obtenir le réseau neuronal de détection d'armes à feu.

**8.** Procédé selon la revendication 7, dans lequel l'étape d'entraînement du réseau de détection initial comprend en outre :
une suppression d'une région candidate d'échantillon dans la pluralité de régions candidates d'échantillon qui présentent une zone en chevauchement inférieure à un seuil avec un bloc rectangulaire qui est manuellement marqué pour une arme à feu.

100

110

X-ray
source

120

130 — Detector

140

Controller

150 — Data
collection
apparatus

160

Computing
device

**Fig. 1**

160

161 — Memory

162 — ROM

163 — RAM

163

167

164 — Input
apparatus

Processor

Display
apparatus

Interface unit

165

166

**Fig. 2**

Sample images of firearms are acquired — S310

The images are preprocessed — S320

A ROI is extracted — S330

**Fig. 3**

Sample images of firearms are acquired — S410

An initial detection network is obtained by fusing a RPN and a CNN — S420

The initial detection network is trained to obtain a firearm detection network — S430

**Fig. 4**

Initialization — S510

Candidate regions are extracted — S520

Positive and negative samples are marked — S530

The CNN detection network is adjusted — S540

The RPN is trained — S550

The CNN detection network is adjusted to converge — S560

**Fig. 5**

X-ray inspection is performed — S610

A plurality of candidate regions are determined using a trained neural network — S620

Classification is performed and it is determined whether a firearm is included — S630

**Fig. 6**

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008009134 A

**Non-patent literature cited in the description**

- **DOMINGO MERY et al.** Modern Computer Vision Techniques for X-Ray Testing in Baggage Inspection. *IEEE Transactions on System, Man, and Cybernetics: System,* 06 December 2016, vol. 47
- **SAMET AKCAY.** Transfer learning using convolutional neural networks for object classification within x-ray baggage security imagery. *2016 IEEE international conference on image processing (ICIP),* 25 September 2016
- **SHAOQING REN et al.** Faster R-CNN: Towards Real-Time Object Detection with Region Proposal Networks. *IEEE Transactions on Pattern Analysis and Machine Intelligence,* 13 September 2015